# EUROPEAN PATENT APPLICATION

(11) **EP 1 580 795 A2**
(43) Date of publication of application: **28.09.2005**
(21) Application number: 05005230.7
(22) Date of filing: 10.03.2005
(51) Int. Cl.: H01J 61/30, H01J 61/067, H01J 9/02, H01J 65/04

(54) **Surface light source device and back light unit having the same**

(30) Priority: 15.03.2004 KR 2004017232
(71) Applicant: Samsung Corning Co., Ltd., Suwon-si, Gyeonggi-do (KR)
(72) Inventor: Ko, Jae-Hyeon, Yeongtong-gu Suwon-si Gyeonggi-do (KR); Kim, Hyun-Sook, Seoul (KR); Cho, Seog-Hyun, Gwangjin-gu Seoul (KR)
(74) Representative: Weitzel, Wolfgang

(57) **Abstract**

A surface light source device includes a light source body having discharge spaces into which a discharge gas is injected. The light source body has a protruded portion corresponding to a remaining portion of a tip that is used for exhausting the discharge spaces and injecting a mercury gas into the discharge spaces. An electrode for applying a voltage to the discharge gas is formed on the light source body to cover the protruded portion.

## Description

### CROSS-REFERENCE TO RELATED APPLICATION

This application claims priority under 35 USC § 119 to Korean Patent Application No. 2004-17232, filed on March 15, 2004, the contents of which are herein incorporated by reference in its entirety for all purposes.

### BACKGROUND OF THE INVENTION

### 1. Field of the Invention

The present invention relates to a surface light source device and a back light unit having the same. More particularly, the present invention relates to an electrode of a surface light source device, and a back light unit having the surface light source device as a light source.

### 2. Description of the Related Art

Generally, a liquid crystal (LC) has a specific electrical and optical characteristic. In detail, when electric fields applied to the LC are changed, an arrangement of the LC molecules is also changed. As a result, an optical transmittance is changed.

A liquid crystal display (LCD) apparatus uses the above-explained characteristics of the LC to display an image. The LCD apparatus has many merits, for example, such as a small volume, a lightweight, etc. Therefore, the LCD apparatus is used in various fields, for example, such as a notebook computer, a mobile phone, television set, etc.

The LCD apparatus includes a liquid crystal controlling part and a light providing part. The liquid crystal controlling part controls the LC. The light providing part provides the liquid crystal controlling part with a light.

The liquid crystal controlling part includes a pixel electrode formed on a first substrate, a common electrode formed on a second substrate and a liquid crystal layer interposed between the pixel electrode and the common electrode. A number of the pixel electrode is determined in accordance with resolution, and a number of the common electrode is one. Each of the pixel electrodes is electrically connected to a thin film transistor (TFT), so that a pixel voltage is applied to the pixel electrode through the TFT. A reference voltage is applied to the common electrode. Both of the pixel electrode and the common electrode include an electrically conductive and optically transparent material.

The light providing part provides the liquid crystal controlling part with a light. The light generated from the light providing part passes through the pixel electrode, the liquid crystal layer and the common electrode in sequence. Therefore, luminance and uniformity of the luminance have great influence on a display quality of the LCD apparatus.

A conventional light providing part employs a cold cathode fluorescent lamp (CCFL) or a light emitting diode (LED). The CCFL has a long cylindrical shape, and the LED has a small dot shape.

The CCFL has high luminance and long lifespan, and generates small amount of heat. The LED has a relatively low efficiency compared to CCFL and thus high power consumption. However, both of the CCFL and the LED have low uniformity of luminance.

Therefore, in order to enhance the uniformity of luminance, the light providing part requires optical members such as a light guide plate (LGP), a diffusion member, a prism sheet, etc. Therefore, both of volume and weight of the LCD apparatus increase.

In order to solve above-mentioned problem, a surface light source device has been developed. The surface light source device may be classified into a partition wall-separated type device and a partition-integrated type device.

A conventional partition wall-separated type surface light source device includes first and second substrates spaced apart from each other, and a plurality of partition walls interposed between the first and second substrates. The partition walls are arranged substantially parallel with each other to define a plurality of discharge spaces. A sealing member is interposed between the first and second substrates to isolate the discharge spaces from the exterior. The sealing member is attached to the first and second substrates via a sealing frit. Discharge gas is injected into the discharge spaces. Electrodes for applying a voltage to the discharge gas are provided as either exterior surface electrodes on an edge portion of the first and second substrates or internal metal electrodes located at each end of the discharge spaces.

On the contrary, a conventional partition wall-integrated surface light source device includes a first substrate and a second substrate having partition wall portions integrally formed therewith. Outermost partition wall portions are attached to the first substrate using a sealing frit to form a plurality of discharge spaces.

When discharge voltages are applied to the electrodes, barrier discharges are generated in the discharge spaces. Electrons generated by the barrier discharge collide against neutral atoms, which are partially ionized to form low-temperature plasma. When some of the neutral atoms are excited by collisions with electrons, they instantaneously returns back to their ground stages generating an ultraviolet light. The excited electrons drop to a ground state to generate an ultraviolet light. The ultraviolet light excites a fluorescent layer to generate a visible light.

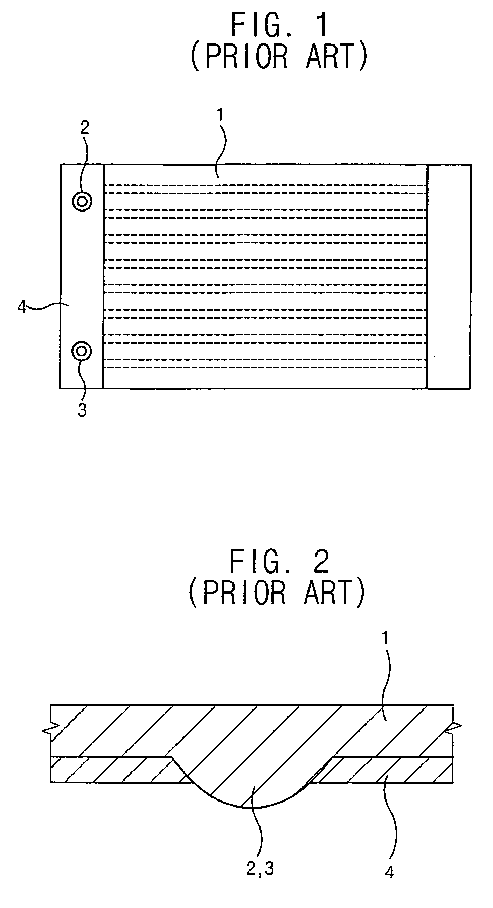

FIG. 1 is a bottom view illustrating a conventional surface light source device.

Referring to FIG. 1, a conventional surface light source device includes a first substrate 1 and a second substrate (not shown) positioned over the first substrate 1. Partition walls (not shown) are arranged in, for example, a serpentine shape between the first substrate 1 and the second substrate to form a plurality of discharge spaces into which a discharge gas is injected. A sealing member (not shown) is interposed between edge portions of the first substrate 1 and the second substrate to isolate the discharge spaces from the exterior. Electrodes 4 are formed on outer faces of the edge portions of the first substrate 1 and the second substrate. There is an advantage of using an external electrode for a flat fluorescent lamp, because only one inverter is needed for igniting the lamp. An exhaustion hole and a mercury injection hole are formed through both ends of the edge portion of the first substrate 1.

In a conventional method of exhausting the discharge spaces and injecting the mercury gas into the discharge spaces, first and second tips are inserted into the exhaustion hole and the mercury injection hole. Here, the first tip is used for exhausting the discharge spaces and injecting the discharge gas. The second tip is used for injecting the mercury gas. Thus, a mercury getter is placed in the second tip.

Vacuum is provided to the discharge spaces through the first tip. Simultaneously, the surface light source device is heated to remove impurities in the surface light source device. The discharge gas is injected into the discharge spaces through the first tip after completing the exhaustion process. The middle portion of the first tip is then heated to remove the first tip from the first substrate 1. Here, the first tip is not completely removed so that the first tip partially remains on the first substrate 1. Therefore, a first protruded portion 2 corresponding to a remaining portion of the first tip is formed on the first substrate 1.

The second tip is then heated to activate the mercury getter. The mercury gas is released from the activated mercury getter and then moved to the discharge spaces by temperature gradient. The middle portion of the second tip is heated to remove the second tip from the first substrate 1. Thus, a second protruded portion 3 corresponding to a remaining portion of the second tip is formed on the first substrate 1.

The electrodes 4 are provided to the edge portions of the first substrate 1 and the second substrate. Examples of the electrodes 4 are a conductive tape, a conductive paste, etc.

Here, luminescence efficiency of the surface light source device is closely related with vapor pressure of the mercury gas. To improve the luminescence efficiency of the surface light source device, the mercury gas having an optimal vapor pressure is provided to the discharge spaces. Meanwhile, the vapor pressure of the mercury gas is determined in accordance with a temperature of the so-called cold spot that corresponds to the coldest portion of the surface light source device. When the temperature of the cold point is too low, the luminescence efficiency of the surface light source device is decreased.

As shown in FIG. 2, according to the conventional surface light source device, the electrodes 4 are not formed on the first and second protruded portions 2 and 3. Thus, the voltage from the electrodes 4 is not directly applied to the first and second protruded portions 2 and 3 so that the first and second protruded portions 2 and 3 correspond to the cold spot of the surface light source device. As a result, a region of the discharge spaces including the first and second protruded portions 2 and 3 may have luminance relatively lower than other regions of the discharge spaces without the first and second protruded portions 2 and 3. Therefore, the conventional surface light source device does not have uniform luminance.

Also, when the conventional surface light source device is operated for a long time, mercury is excessively condensed in the first and second protruded portions 2 and 3. As a result, an effective amount of mercury in the discharge spaces is reduced so that a life span of the conventional surface light source device is shortened.

### SUMMARY OF THE INVENTION

The present invention provides a surface light source device having a uniform luminance by suppressing generation of a cold spot of the protruded portions.

The present invention also provides a surface light source device that is capable of suppressing excessive condensation of mercury in a protruded portion.

The present invention still also provides a back light unit having the above-mentioned surface light source device as a light source.

A surface light source device in accordance with one aspect of the present invention includes a light source body having discharge spaces into which a discharge gas is injected. The light source body has a protruded portion corresponding to a remaining portion of a tip that is used for exhausting the discharge spaces and injecting a mercury gas into the discharge spaces. An electrode for applying a voltage to the discharge gas is formed on the light source body to cover the protruded portion. In this case, the protruded portion will not play the role of the cold spot, and the luminance of these portions will not decrease. In addition, excess mercury condensation on the protruded portion will not occur.

According to one embodiment, the electrode may have a groove adjacent to the protruded portion if these portions are brighter than the other portions due to the larger electrode area. In this case, regions without the protruded portion will have almost the same electrode area as the regions having the protruded portion. Same electrode area will serve as a same capacitance for igniting the discharge spaces, resulting in the same luminance.

According to another embodiment, the light source body includes a first substrate, a second substrate facing the first substrate, a sealing member interposed between edge portions of the first and second substrates to form an inner space between the first and second substrate, and partition wall arranged between the first and second substrates to divide the inner space into the discharge spaces.

According to still another embodiment, the light source body includes a first substrate, and a second substrate having partition wall portions. The partition wall portions are attached to the first substrate to form the discharge spaces.

A back light unit in accordance with another aspect of the present invention includes a surface light source device, a case for receiving the surface light source device, an optical sheet interposed between the surface light source device and the case, and an inverter for applying a discharge voltage to the surface light source device. The surface light source device includes a light source body having discharge spaces into which a discharge gas is injected. The light source body has a protruded portion corresponding to a remaining portion of a tip that is used for exhausting the discharge spaces and injecting a mercury gas into the discharge spaces. An electrode for applying a voltage to the discharge gas is formed on the light source body to cover the protruded portion.

According to the present invention, the electrode is positioned on the external surfaces of the light source body including the protruded portion so that the protruded portion functioning as a cold spot may be suppressed. Thus, the surface light source device may have uniform luminance. Also, the mercury gas may not be excessively condensed in the protruded portion so that a sufficient amount of the mercury gas is provided to the discharge spaces. As a result, the surface light source device may have a long life span.

### BRIEF DESCRIPTION OF THE DRAWINGS

The above and other features and advantages of the present invention will become more apparent by describing in detailed exemplary embodiments thereof with reference to the accompanying drawings, in which:
FIG. 1 is a bottom view illustrating a conventional surface light source device;
FIG. 2 is an enlarged cross sectional view illustrating a protruded portion of the conventional surface light source device in FIG. 1;
FIG. 3 is a plan view illustrating a surface light source device in accordance with a fist embodiment of the present invention;
FIG. 4 is a cross sectional view illustrating the surface light source device in FIG. 3;
FIG. 5 is an enlarged cross sectional view illustrating a portion V in FIG. 4;
FIG. 6 is a bottom view illustrating a surface light source device in accordance with a second embodiment of the present invention;
FIG. 7 is an enlarged cross sectional view illustrating a surface light source device in accordance with a third embodiment of the present invention; and
FIG. 8 is an exploded perspective view illustrating a back light unit having the surface light source device in FIG. 7 in accordance with a fourth embodiment of the present invention.

### DESCRIPTION OF EMBODIMENTS

The present invention is described more fully hereinafter with reference to the accompanying drawings, in which embodiments of the invention are shown. This invention may, however, be embodied in many different forms and should not be construed as limited to the embodiments set forth herein. Rather, these embodiments are provided so that this disclosure will be thorough and complete, and will fully convey the scope of the invention to those skilled in the art. In the drawings, the size and relative sizes of elements and regions may be exaggerated for clarity.

It will be understood that when an element or layer is referred to as being "on", "connected to" or "coupled to" another element, it can be directly on, connected or coupled to the other element or layer or intervening elements may be present. In contrast, when an element is referred to as being "directly on," "directly connected to" or "directly coupled to" another element, there are no intervening elements present. Like numbers refer to like elements throughout. As used herein, the term "and/or" includes any and all combinations of one or more of the associated listed items.

It will be understood that, although the terms first, second, etc. may be used herein to describe various elements, these elements should not be limited by these terms. These terms are only used to distinguish one element from another element. Thus, a first element discussed below could be termed a second element without departing from the teachings of the present invention.

Spatially relative terms, such as "beneath", "below", "lower", "above", "upper" and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" the other elements or features. Thus, the exemplary term "below" can encompass both an orientation of above and below. The device may be otherwise oriented (rotated 90 degrees or at other orientations) and the spatially relative descriptors used herein interpreted accordingly.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "includes" and/or "including", when used in this specification, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

### Embodiment 1

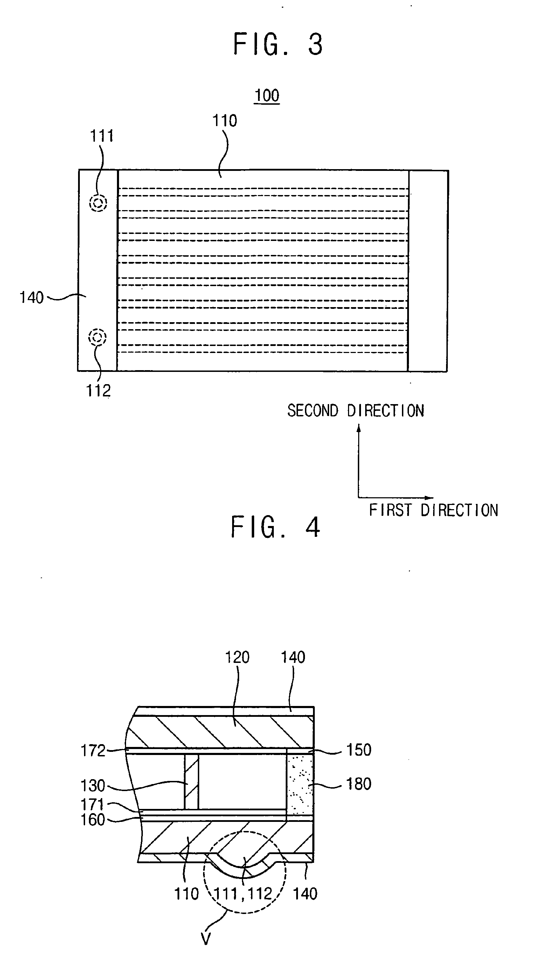

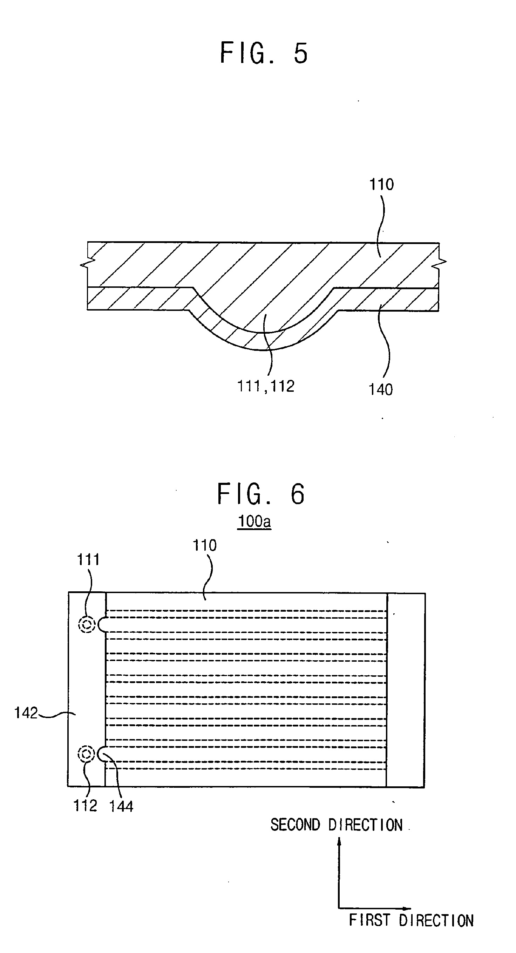

FIG. 3 is a plan view illustrating a surface light source device in accordance with a fist embodiment of the present invention, FIG. 4 is an enlarged cross sectional view illustrating the surface light source device in FIG. 3 and FIG. 5 is an enlarged cross sectional view illustrating a portion V in FIG. 4.

Referring to FIGS. 3 and 4, a surface light source device 100 in accordance with the present embodiment includes a light source body and an electrode 140.

The light source body is a partition wall separation type. Thus, the light source body includes a first substrate 110 and a second substrate 120 positioned over the first substrate 110. A sealing member 150 is interposed between edge portions of the first and second substrates 110 and 120 to form an inner space isolated from the exterior in the first and second substrates 110 and 120. Partition walls 130 are arranged in the inner space in a first direction to divide the inner space into discharge spaces. The partition walls 130 are attached to the first and second substrates 110 and 120 using a frit 180. In particular, the partition walls 130 are arranged in a serpentine shape so that the discharge spaces are in communication with each other. Thus, exhausting the discharge spaces, injecting a discharge gas into the discharge spaces and providing a mercury gas to the discharge spaces are carried out.

The first substrate 110 has first and second protruded portions 111 and 112. The first protruded portion 111 corresponds to a remaining portion of a tip used for exhausting the discharge spaces. The second protruded portion 112 corresponds to a remaining portion of a tip used for injecting the mercury gas into the discharge spaces. As described above, after the tips are removed by heating, the tips are not completely removed. Thus, the first and second protruded portions 111 and 112 are formed on the first substrate 110.

Here, the first and second protruded portions 111 and 112 are positioned on corners of the first substrate 110 in a second direction substantially perpendicular to the first direction. Alternatively, the first protruded portion 111 may be positioned on a corner of the first substrate 110 and the second protruded portion 112 may be positioned on another corner of the first substrate 110 that is diagonally positioned with respect to the corner. Also, the first and second protruded portions 111 and 112 may be formed on the second substrate 120.

The electrode 140 is provided to outer faces of the first and second substrates 110 and 120. The electrode 140 is arranged on both ends of the first and second substrates 110 and 120 in the second direction. Thus, the electrode 140 is substantially perpendicular to a length direction of the partition walls 130. Examples of the electrode 140 are a conductive tape, a conductive paste, etc.

As shown in FIG. 5, the electrode 140 covers the first and second protruded portions 111 and 112. Therefore, a voltage from the electrode 140 is directly applied to the first and second protruded portions 111 and 112 so that the first and second protruded portions 111 and 112 may not be prevented from functioning as a cold spot. A discharge space with the first and second protruded portions 111 and 112 may have luminance substantially identical to or even higher than that of other discharge spaces without the first and second protruded portions 111 and 112. Also, the mercury gas may not be excessively condensed into mercury liquid in the first and second protruded portions 111 and 112.

Additionally, a reflective layer 160 is formed on the first substrate 110. A first fluorescent layer 171 is formed on the reflective layer 160. A second fluorescent layer 172 is formed beneath the second substrate 120.

### Embodiment 2

FIG. 6 is a bottom view illustrating a surface light source device in accordance with a second embodiment of the present invention.

A surface light source device 100a of the present embodiment includes elements substantially identical to those of the surface light source device 100 in Embodiment 1 except an electrode 142. Thus, same reference numerals refer to same elements and any further illustrations with respect to the same elements are omitted.

Referring to FIG. 6, the electrode 142 is formed on the outer faces of the first substrate 110 and the second substrate (not shown) to cover the first and second protruded portions 111 and 112. Here, since the electrode 142 covers the first and second protruded portions 111 and 112, a first portion of the electrode 142 corresponding to a first discharge space with the first protruded portion 111 or the second protruded portion 112 has an area larger than that of a second portion of the electrode 142 corresponding to a second discharge space without the first and second protruded portions 111 and 112. This may cause a non-uniform luminance of the surface light source device 100a.

To prevent the non-uniform luminance of the surface light source device 100a, the electrode 142 is partially removed to form a groove 144 adjacent to the first and second protruded portions 111 and 112. The groove 144 may be formed at an inner side of the electrode 142. Also, an area of the groove 144 may be determined in accordance with the luminance of each of the discharge spaces.

Alternatively, a hole in place of the groove 144 may be formed through the electrode 142 adjacent to the first and second protruded portions 111 and 112.

### Embodiment 3

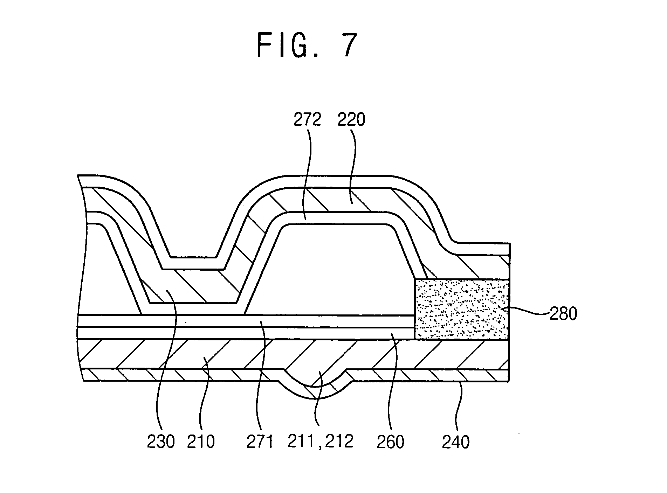

FIG. 7 is an enlarged cross sectional view illustrating a surface light source device in accordance with a third embodiment of the present invention.

A surface light source device 200 of the present embodiment includes elements substantially identical to those of the surface light source device 100 in Embodiment 1 except a light source body. Thus, only the light source body is illustrated in detail and any further illustrations with respect to other elements are omitted.

Referring to FIG. 7, the light source body is a partition wall-integrated type. Thus, the light source body includes a first substrate 210 having first and second protruded portions 211 and 212, and a second substrate 220 having partition wall portions 230. That is, the partition wall portions 230 are formed integrally with the second substrate 220. The partition wall portions 230 are attached to the first substrate 210 using a frit 280 to form discharge spaces.

An electrode 240 is formed on outer edge portions of the first and second substrate 210 and 220 to cover the first and second protruded portions 211 and 212. Additionally, a groove (not shown) may be formed at the electrode 240 adjacent to the first and second protruded portions 211 and 212.

A reflective layer 260 is formed on the first substrate 210. A first fluorescent layer 271 is formed on the reflective layer 260. A second fluorescent layer 272 is formed beneath the second substrate 220.

### Embodiment 4

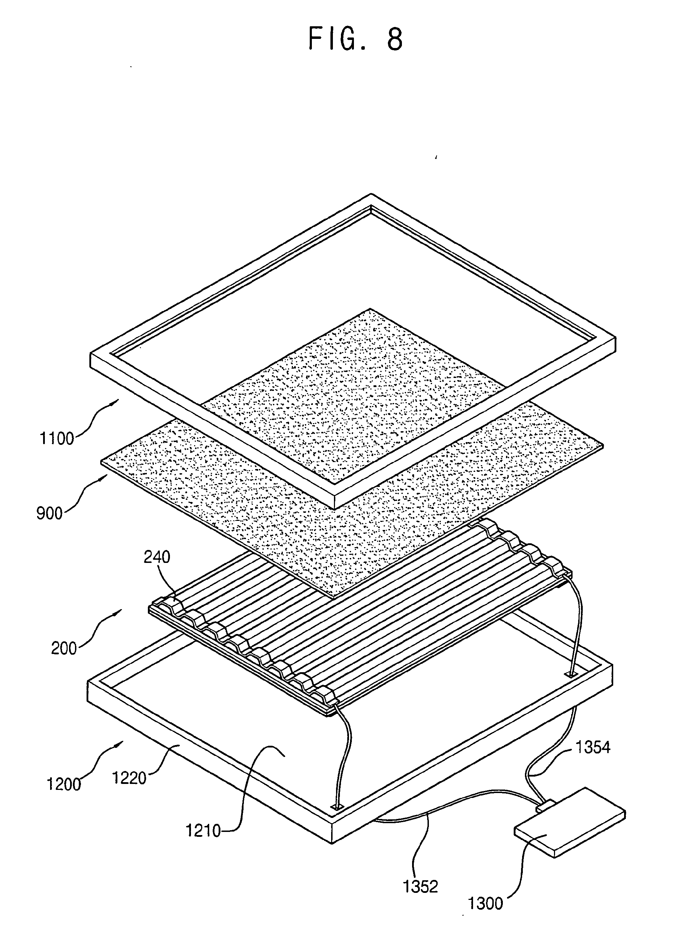

FIG. 8 is an exploded perspective view illustrating a back light unit having the surface light source device in FIG. 7 in accordance with a fourth embodiment of the present invention.

Referring to FIG. 8, a back light unit 1000 in accordance with the present embodiment includes the surface light source device 200 in FIG. 7, upper and lower cases 1100 and 1200, an optical sheet 900 and an inverter 1300.

The surface light source device 200 is illustrated in detail with reference to FIG. 7. Thus, any further illustrations of the surface light source device 200 are omitted. Also, other surface light source devices in accordance with Embodiments 1 and 2 may be employed in the back light unit 1000.

The lower case 1200 includes a bottom face 1210 for receiving the surface light source device 200, and a side face 1220 extending from an edge of the bottom face 1210. Thus, a receiving space for receiving the surface light source device 200 is formed in the lower case 1200.

The inverter 1300 is arranged under the lower case 1200. The inverter 1300 generates a discharge voltage for driving the surface light source device 200. The discharge voltage generated from the inverter 1300 is applied to the electrode 240 of the surface light source device 200 through first and second electrical cables 1352 and 1354.

The optical sheet 900 includes a diffusion sheet (not shown) for uniformly diffusing a light irradiated from the surface light source device 200, and a prism sheet (not shown) for providing straightforwardness to the light diffused by the diffusion sheet.

The upper case 1100 is combined with the lower case 1220 to support the surface light source device 200 and the optical sheet 900. The upper case 1100 prevents the surface light source device 200 from being separated from the lower case 1200.

Additionally, an LCD panel (not shown) for displaying an image may be arranged over the upper case 1100.

### Measuring temperature distribution of the surface light source device in accordance with the present invention

After the surface light source device in Embodiment 1 was operated for about 1 hour, a temperature distribution of the surface light source device was measured. The first substrate had a temperature of 45°C to 50°C. On the contrary, the first and second protruded portions had temperatures of 55°C. The temperatures of the first and second protruded portions covered by the electrode were higher than that of the first substrate by about 5°C. It should be noted that effecting the first and second protruded portions as the cold point was prevented.

According to the present invention, the electrode covers the protruded portions so that the protruded portion may be suppressed from functioning as the cold spot. Thus, the surface light source device may have uniform luminance.

Also, the mercury gas may not be excessively condensed in the protruded portion so that a sufficient amount of the mercury gas is provided to the discharge spaces. As a result, the surface light source device may have a long life span.

Having described the exemplary embodiments of the present invention and its advantages, it is noted that various changes, substitutions and alterations can be made herein without departing from the spirit and scope of the invention as defined by appended claims.

## Claims

1. A surface light source device comprising:
a light source body having discharge spaces and a protruded portion, the protruded portion corresponding to a remaining portion of a tip used for exhausting the discharge space and/or for injecting a discharge gas into the discharge spaces; and
an electrode for applying a voltage to the discharge gas, the electrode formed on an outer face of the light source body to cover the protruded portion.

2. The surface light source device of claim 1, wherein the light source body comprises:
a first substrate having the protruded portion;
a second substrate facing the first substrate;
a sealing member interposed between edge portions of the first and second substrates to form an inner space between the first and second substrates; and
partition walls dividing the inner space into the discharge spaces.

3. The surface light source device of claim 1, wherein the light source body comprises:
a first substrate; and
a second substrate integrally formed with partition wall portions, the partition wall portions being attached to the first substrate to form the discharge spaces.

4. The surface light source device of claim 1, wherein a groove is formed at a portion of the electrode adjacent to the protruded portion.

5. The surface light source device of claim 4, wherein the groove is formed at an inner side of the electrode.

6. A surface light source device comprising:
a light source body having discharge spaces and a protruded portion, the protruded portion corresponding to a remaining portion of a tip used for exhausting the discharge space and/or for injecting a discharge gas into the discharge spaces,
the light source body including a first substrate having the protruded portion; a second substrate facing the first substrate; a sealing member interposed between edge portions of the first and second substrates to form an inner space between the first and second substrates; and partition walls dividing the inner space into the discharge spaces; and
an electrode for applying a voltage to the discharge gas, the electrode formed on an outer face of the light source body to cover the protruded portion,
wherein a groove is formed at a portion of the electrode adjacent to the protruded portion.

7. The surface light source device of claim 6, wherein the groove is formed at an inner side of the electrode.

8. A surface light source device comprising:
a light source body having discharge spaces and a protruded portion, the protruded portion corresponding to a remaining portion of a tip used for exhausting the discharge space and/or for injecting a discharge gas into the discharge spaces, wherein the light source body comprises: a first substrate and a second substrate integrally formed with partition wall portions, the partition wall portions being attached to the first substrate to form the discharge spaces; and
an electrode for applying a voltage to the discharge gas, the electrode formed on an outer face of the light source body to cover the protruded portion,
wherein a groove is formed at a portion of the electrode adjacent to the protruded portion.

9. The surface light source device of claim 8, wherein the groove is formed at an inner side of the electrode.

10. A back light unit comprising:
a surface light source device including a light source body that has discharge spaces and a protruded portion, the protruded portion corresponding to a remaining portion of a tip used for exhausting the discharge space and/or for injecting a discharge gas into the discharge spaces, and an electrode for applying a voltage to the discharge gas, the electrode formed on an outer face of the light source body to cover the protruded portion.
a case for receiving the surface light source device;
an optical sheet interposed between the surface light source device and the case; and
an inverter for applying a discharge voltage to the electrode of the surface light source device.
